# EUROPÄISCHE PATENTSCHRIFT

(11) **EP 0 953 104 B1**
(45) Veröffentlichungstag und Bekanntmachung des Hinweises auf die Patenterteilung: **11.04.2001**
(21) Anmeldenummer: 98947363.2
(22) Anmeldetag: 29.07.1998
(51) Int. Cl.: F02M 31/18, F02M 69/32

(54) **EINRICHTUNG ZUR VERDAMPFUNG VON BRENNSTOFF**
FUEL EVAPORATING DEVICE
DISPOSITIF D'EVAPORATION DE CARBURANT

(30) Priorität: 08.11.1997 DE 19749471
(43) Veröffentlichungstag der Anmeldung: 03.11.1999
(73) Patentinhaber: ROBERT BOSCH GMBH, 70442 Stuttgart (DE)
(72) Erfinder: KNETSCH, Manfred, D-71229 Leonberg (DE); EICHENDORF, Andreas, D-73614 Schorndorf (DE); VOGEL, Christof, D-96120 Bischberg (DE)
(86) Internationale Anmeldenummer: DE9802143
(87) Internationale Veröffentlichungsnummer: WO9924707

(56) Entgegenhaltungen:
- EP-A- 0 509 982
- EP-A- 0 677 653
- DE-A- 3 516 687
- DE-A- 19 522 074
- DE-A- 19 542 317
- DE-A- 19 624 368
- DE-A- 19 645 819
- GB-A- 2 076 056
- US-A- 4 137 872
- US-A- 4 550 706
- US-A- 5 400 969

## Beschreibung

### Stand der Technik

Die Erfindung geht aus von einer Einrichtung zur Verdampfung von Brennstoff nach der Gattung des Anspruchs 1. Es ist bereits eine Einrichtung zur Verdampfung von Brennstoff in einer Brennkraftmaschine aus der GB-OS 2 248 087 bekannt, die ein Ansaugrohr besitzt, das in ein Sammelsaugrohr übergeht, von dem Einzelsaugrohre zu den einzelnen Brennräumen beziehungsweise zu den einzelnen Zylindern der Brennkraftmaschine abzweigen. Mittels an den Einzelsaugrohren stromaufwärts von Einlaßventilen der Brennräume angeordneter Brennstoffeinspritzventile kann Brennstoff in die Einzelsaugrohre abgegeben werden, um so ein zündfähiges Brennstoff-Luft-Gemisch aufzubereiten, das bei offenen Einlaßventilen in die Brennräume einströmt. Ein elektronisches Motorsteuergerät steuert dabei abhängig von der angesaugten Luftmasse der Brennkraftmaschine sowie von anderen Motorbetriebsparametern die von den Brennstoffeinspritzventilen abgegebene Brennstoffmenge.

Zusätzlich zur Einspritzung mittels den einzelnen Brennstoffeinspritzventilen besitzt die Brennkraftmaschine ein weiteres zentrales Einspritzventil, das Teil einer zentralen Brennstoffverdampfungseinrichtung ist, die Brennstoffdampf bereitstellen kann, der dann stromaufwärts eines zum Beispiel in Form einer Drosselklappe ausgebildeten Drosselorgans in das Ansaugrohr abgegeben wird. Die Zufuhr von Brennstoffdampf mittels der Einrichtung zur Brennstoffverdampfung ist dabei auf den unteren Lastbereich, insbesondere auf den Leerlaufbereich der Brennkraftmaschine, beschränkt. Im oberen Lastbereich, insbesondere in der Vollast, hingegen liefern ausschließlich die den Brennräumen zugeordneten Brennstoffeinspritzventile den benötigten Brennstoff. Durch die Zufuhr von dampfförmigem Brennstoff in das Ansaugrohr soll während der Start- und Warmlaufphase der Brennkraftmaschine ein ansonsten stattfindender Niederschlag des Brennstoffes an kalten Wänden der Brennkraftmaschine weitestgehend verhindert werden, um so die Emissionen an schädlichen Abgasbestandteilen, insbesondere von Kohlenwasserstoffen, stark senken zu können.

Eine Brennkraftmaschine mit einem zentralen Kraftstoffverdampfer ist ebenso bereits aus der DE-OS 195 22 074 bekannt. Der zentrale Kraftstoffverdampfer ist dabei als Heizvorsatz ausgebildet, der an einem Einspritzventil angebracht ist. Als Verdampferstruktur werden entweder plattenförmige oder poröse Heizelemente mit engen Kapillaren oder Kanälen verwendet, wobei auch Whisker- oder Sintermaterial zur Anwendung kommen kann. Alle Heizelemente werden vom Kraftstoff benetzt, was z.B. bei Verwendung von PTC- oder NTC-Elementen zur Zerstörung der Elemente führen kann.

Zudem ist bereits aus der EP-PS 0 677 653 eine Einrichtung zur Vernebelung von Kraftstoff bekannt, die ebenfalls als Heizvorsatz an einem Einspritzventil verwendet werden kann, wobei es sich bei diesen Einspritzventilen um Ventile für die MPI (Multi Point Injection), und nicht um ein zentrales SPI-Ventil (Single Point Injection) handelt. Der Heizvorsatz ist in Form eines sogenannten Spaltenheizers ausgeführt, bei dem profilierte Verdampferkontaktbleche und PTC-Heizelemente sandwichartig angeordnet sind, so daß sich eine Vielzahl von spaltförmigen Verdampferräumen ergibt. Mit den gefalteten Verdampferkontaktblechen sind die einzelnen Verdampferräume nicht maßgleich ausformbar. Diese maßlichen Unterschiede können zu unerwünschten Schwankungen in der Verdampferfront führen. Sämtliche Heizelemente werden vom Kraftstoff benetzt, was z.B. bei Verwendung von PTC- oder NTC-Elementen zum Platzen oder zum Durchbrechen der Elemente führen kann. In letzter Konsequenz ist damit nicht nur ein Funktionsausfall der Vernebelungseinrichtung verbunden, sondern es besteht sogar eine erhöhte Gefahr eines Brandes.

### Vorteile der Erfindung

Die erfindungsgemäße Einrichtung zur Verdampfung von Brennstoff mit den kennzeichnenden Merkmalen des Anspruchs 1 hat den Vorteil, daß eine sehr gleichmäßige Erzeugung von Brennstoffdampf möglich ist. In vorteilhafter Weise wird so ein Beitrag dazu geleistet, den nachfolgend aufbereiteten Brennstoffdampf beziehungsweise ein zu bildendes Brennstoff-Luft-Gemisch inklusive des Brennstoffdampfes in einer derartigen Qualität einzelnen Brennräumen einer Brennkraftmaschine zur Verbrennung bereitzustellen, daß ein Einhalten extrem niedriger Abgaswerte, ein Erzielen niedriger Brennstoffverbrauchswerte sowie eines ruhigen Laufs der Brennkraftmaschine möglich ist.

In besonders vorteilhafter Weise finden in der erfindungsgemäßen Einrichtung gleichzeitig zwei parallel und unabhängig voneinander ablaufende Erwärmungsprozesse statt, da die Einrichtung so konzipiert ist, daß in der Verdampferstruktur auf einer Seite der Heizelemente Luft erwärmt und auf der anderen Seite der Heizelemente Brennstoff verdampft wird. Die Heizelemente sind in einem Verdampfergehäuse derart gekapselt, daß kein Brennstoffkontakt möglich ist. Ein Belüften und Spülen der Heizelemente mit der durch die Einrichtung strömenden Luft wird jedoch gewährleistet. Einerseits wird in vorteilhafter Weise die Luft erwärmt, und andererseits wird wirkungsvoll verhindert, daß die dünnen, empfindlichen Heizelemente durchbrennen, reißen, brechen oder platzen.

Durch die in den Unteransprüchen aufgeführten Maßnahmen sind vorteilhafte Weiterbildungen und Verbesserungen der im Anspruch 1 angegebenen Einrichtung möglich.

In vorteilhafter Weise liegen die Heizelemente zwischen zwei ebenen, folienartigen Trennblechen eingebettet vor, die sowohl die Abdichtung der Heizelemente als auch die elektrische Kontaktierung übernehmen. Dadurch, daß die Trennbleche direkt im formsteifen Verdampfergehäuse eingebracht sind, wird garantiert, daß die Heizelemente eine optimale, spannungsarme und verzugsarme Auflage haben, womit ein Auseinanderbrechen der Heizelemente verhindert wird. Von Vorteil ist es, das Verdampfergehäuse mehrteilig auszuführen, wobei jeweils ein Trennblech in einem Gehäuseteil eingebracht ist. Ein die beiden Gehäuseteile gegeneinander klammerndes Federelement sorgt dafür, daß ein gleichmäßiges Anpressen der Trennbleche gegen die Heizelemente erfolgt, wodurch ebenfalls eine sichere elektrische Kontaktierung gewährleistet ist. Das Federelement ist so ausgeführt, daß es in vorteilhafter Weise mit seinem Biegeprofil flächig über die gesamte Länge der Heizelemente gleichmäßig wirkt.

Ganz besonders vorteilhaft ist es, zur Stabilisierung der in den Strömungskanälen für den Brennstoff, also in den Verdampfungsräumen, entstehenden Verdampfungs front Maßnahmen vorzusehen. So sind die Verdampfungsräume beispielsweise mit Querschnittsverjüngungen oder die Heizelemente entlang der Massenströmung mit ansteigenden Curietemperaturen ausgeführt. Diese Stabilisierungsmaßnahmen gewährleisten eine besonders gleichmäßige Brennstoffdampferzeugung.

Besonders vorteilhaft ist es, der Einrichtung zur Verdampfung von Brennstoff einen Mischraum nachzuschalten, in den sowohl aus der Einrichtung stammender verdampfter Brennstoff als auch die erwärmte Luft eingebracht werden. So kann wirkungsvoll eine Rückkondensation des Brennstoffdampfes bzw. eine Anlagerung schwerflüchtiger Brennstoffbestandteile in den Brennstoffdampf führenden Leitungen der Brennkraftmaschine verhindert werden. Von besonderem Vorteil ist die Ausbildung des Mischraums als Mischeinrichtung mit integriertem Brennstoffabscheider.

### Zeichnung

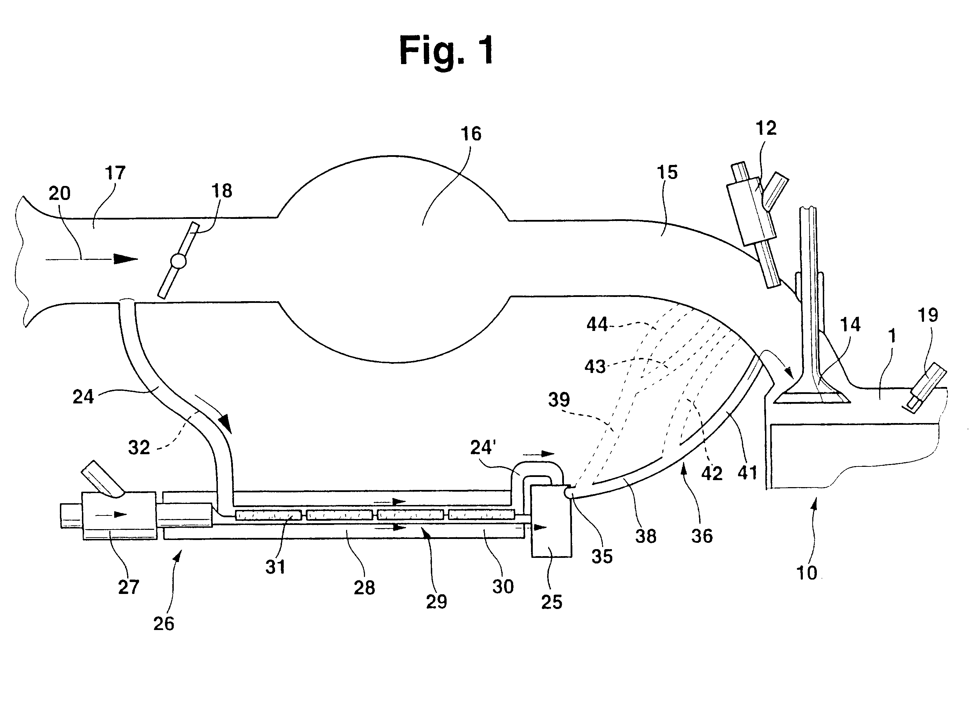

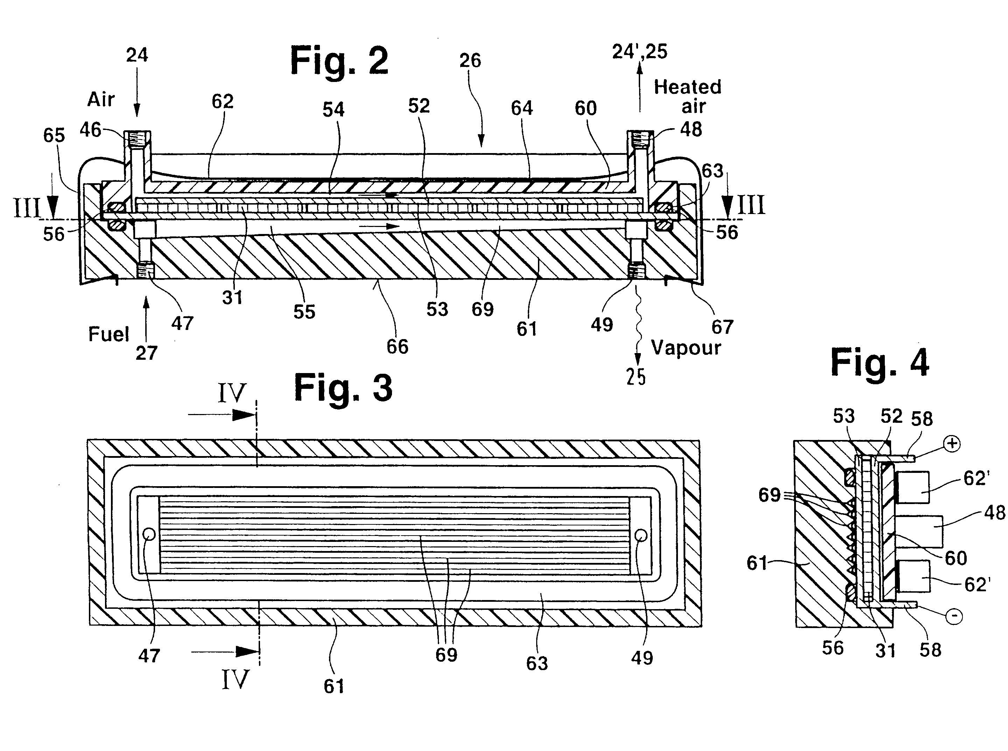

Ausführungsbeispiele der Erfindung sind in der Zeichnung vereinfacht dargestellt und in der nachfolgenden Beschreibung näher erläutert. Es zeigen Figur 1 in Schnittdarstellung eine Teilansicht einer Brennkraftmaschine mit einer erfindungsgemäßen Einrichtung zur Verdampfung von Brennstoff, Figur 2 eine Einrichtung zur Verdampfung von Brennstoff im Schnitt, Figur 3 eine Schnittdarstellung entlang der Linie III-III in Figur 2 und Figur 4 einen Schnitt entlang der Linie IV-IV in Figur 3.

### Beschreibung der Ausführungsbeispiele

In Figur 1 ist in Schnittdarstellung schematisch eine Teilansicht einer Brennkraftmaschine 10 dargestellt, die z.B. vier Zylinder 1 als Brennräume aufweist, wobei in Figur 1 nur ein einzelner Zylinder 1 dargestellt ist. Jeder Zylinder 1 verfügt über zumindest ein Einlaßventil 14 und eine Zündkerze 19. Stromaufwärts des Einlaßventils 14 ist zumindest ein Brennstoffeinspritzventil 12 an einem Einzelsaugrohr 15 der Brennkraftmaschine 10 vorgesehen, das Brennstoff in das Einzelsaugrohr 15 in Richtung des Einlaßventils 14 abgeben kann. Die vier Einzelsaugrohre 15 gehen z.B. von einem Sammelsaugrohr 16 aus, das Teil eines weiterführenden Ansaugrohres 17 der Brennkraftmaschine 10 ist. In dem Ansaugrohr 17 ist ein Drosselorgan 18 zur Steuerung der von der Brennkraftmaschine 10 angesaugten Luftmenge untergebracht, das beispielsweise in Form einer Drosselklappe ausgebildet und drehbar im Ansaugrohr 17 untergebracht ist. Die von der Brennkraftmaschine 10 aus der Umgebung angesaugte Luft strömt über einen nicht näher dargestellten Luftfilter in Richtung eines in Figur 1 eingezeichneten Pfeils 20 in das Ansaugrohr 17 ein, wo sie bei geöffneter Drosselklappe 18 in das Sammelsaugrohr 16 weiterströmt, um von diesem über die Einzelsaugrohre 15 auf die einzelnen Zylinder 1 der Brennkraftmaschine 10 aufgeteilt zu werden.

Stromaufwärts der Drosselklappe 18 zweigt eine Leerlaufluftleitung 24 vom Ansaugrohr 17 ab, welche zu einer Einrichtung 26 zur Brennstoffverdampfung führt. In der Leerlaufluftleitung 24 kann eine Drossel 32 z.B. in Form einer Blende vorgesehen sein, welche die in der Leerlaufluftleitung 24 strömende Luftmenge durch Drosselung begrenzt. Der Einrichtung 26 zur Brennstoffverdampfung ist z.B. ein zentrales Einspritzventil 27 vorgeschaltet, wobei die Einrichtung 26 als Heizvorsatz 28 des Einspritzventils 27 ausgebildet sein kann. Die Einrichtung 26 beinhaltet eine beispielsweise in bekannter Weise elektrisch beheizbare Verdampferstruktur 29 für flüssigen Brennstoff und hat hierzu Heizelemente 31, die zum Beispiel als Widerstands-Heizelemente einen positiven Temperaturkoeffizienten (PTC) oder einen negativen Temperaturkoeffizienten (NTC) aufweisen können. Zur Steuerung der Heizelemente 31 kann beispielsweise ein nicht näher dargestelltes elektronisches Steuergerät vorgesehen sein. Die Heizelemente 31 sind in einem Verdampfergehäuse 30 untergebracht und zum Beispiel plattenförmig ausgebildet und weisen gegebenenfalls eine poröse Oberfläche auf. Die Einrichtung 26 ist derart ausgeführt, daß auf einer Seite der Heizelemente 31 aus der Leerlaufluftleitung 24 zugeführte Luft vorbei strömen kann, während sich auf der gegenüberliegenden Seite der Heizelemente 31 separat von der Luftströmung eine Verdampfungsfront des mit dem Einspritzventil 27 eingespritzten und zu verdampfenden Brennstoffs entlang bewegen kann. Sowohl die in der Einrichtung 26 erwärmte Luft als auch der erzeugte Brennstoffdampf werden beispielsweise in einen der Verdampfungseinrichtung 26 nachgeordneten Mischraum 25 eingebracht. Die Figuren 2 bis 4 verdeutlichen den Aufbau der Einrichtung 26 besser.

Von dem Mischraum 25 hinter der Verdampfungseinrichtung 26 geht eine Zentralleitung 35 aus, die in ein verzweigtes Leitungssystem 36 übergeht, das eine Strömungsverbindung der einzelnen Zylinder 1 der Brennkraftmaschine 10 mit dem Mischraum 25 herstellt. Das Leitungssystem 36 ist zu den Einzelsaugrohren 15 der Brennkraftmaschine 10 derart verzweigt ausgebildet, daß nur jeweils Zylinder 1, die nicht in direkter Zündfolge zueinander stehen, paarweise miteinander und gemeinsam über die Zentralleitung 35 mit der Einrichtung 26 zur Brennstoffverdampfung beziehungsweise dem Mischraum 25 verbunden sind.

In der Figur 1 ist das Leitungssystem 36 für eine vierzylindrige fremdgezündete Brennkraftmaschine 10 gezeigt. Die von der Einrichtung 26 zur Brennstoffverdampfung wegführende Zentralleitung 35 verzweigt sich in eine erste Zylinderpaarleitung 38 und in eine zweite Zylinderpaarleitung 39. Die erste Zylinderpaarleitung 38 verzweigt sich weiter in eine erste Zylinderleitung 41 für einen ersten Zylinder 1 und in eine zweite Zylinderleitung 42 für einen vierten Zylinder 1. In gleicher Weise verzweigt sich die zweite Zylinderpaarleitung 39 in eine dritte Zylinderleitung 43 für einen dritten Zylinder 1 und in eine vierte Zylinderleitung 44 für einen zweiten Zylinder 1. Die Leitungen 35, 38, 39, 41 bis 44 des Leitungssystems 36 sind vorzugsweise in Form von Rohren oder Schläuchen ausgebildet, die aus einem elastischen Material mit geringer Wärmeleitfähigkeit, zum Beispiel aus Kunststoff, bestehen. Der Anschluß der Zylinderleitungen 41 bis 44 beziehungsweise die Einleitung des Brennstoffdampfes in die Einzelsaugrohre 15 erfolgt, wie in Figur 1 dargestellt ist, in relativer Nähe der Einlaßventile 14 der Brennkraftmaschine 10.

Der Betrieb der Einrichtung 26 zur Brennstoffverdampfung ist vorzugsweise auf den unteren Lastbereich, insbesondere auf den Leerlaufbereich der Brennkraftmaschine 10, beschränkt. Es ist aber auch möglich, den Betrieb der Einrichtung 26 auch im an den Leerlaufbereich anschließenden Teillastbereich und sogar bis kurz vor dem Erreichen der Vollast der Brennkraftmaschine vorzusehen. Insbesondere im Bereich der oberen Teillast kann sich dabei ein Brennstoff-Luft-Gemisch in den Leitungen 35, 38, 39, 41 bis 44 ergeben, das zu fett ist, also einen zum Erreichen der Zündung mittels Zündkerzen 19 zu hohen Brennstoffanteil aufweist. Ein Erhöhen des Luftanteils ist nicht möglich, da die dem Mischraum 25 über die Einrichtung 26 zugeführte Luftmenge zum Beispiel von der in der Leerlaufluftleitung 24 vorgesehenen Drossel 32 konstant gehalten wird. Dies hat jedoch für die Verbrennung in den Zylindern 1 keinen Einfluß, da nach dem Einspeisen des zu fetten Brennstoff-Luft-Gemisches über die Leitungen 41 bis 44 sich durch Vermischen mit der angesaugten Luft in den Einzelsaugrohren 15 wieder ein zündfähiges Brennstoff-Luft-Gemisch einstellt.

Bei der Einleitung des Brennstoff-Luft-Gemisches über die Einrichtung 26 zur Verdampfung von Brennstoff wird kein Brennstoff über die Brennstoffeinspritzventile 12 abgespritzt. Lediglich das zentrale Einspritzventil 27 gibt Brennstoff in flüssiger Form ab, der dann in die elektrisch beheizte Verdampferstruktur 29 der Einrichtung 26 gelangt, um in dieser aufgeheizt zu werden und zumindest teilweise zu verdampfen. Aufgrund der beim Aufheizen stattfindenden Volumenänderung des flüssigen Brennstoffs beim Übergang in die Dampfphase wird dieser in den Mischraum 25 befördert. Gleichzeitig wird in den Mischraum 25 über eine weitere Luftleitung 24' die in der Verdampfungseinrichtung 26 erwärmte Luft eingebracht, um so im Mischraum 25 im Leerlaufbereich ein zündfähiges Brennstoff-Luft-Gemisch mit λ<1 zu erhalten, das dann über die Zentralleitung 35 in das Leitungssystem 36 abgegeben wird und sich dort mit der von der Drosselklappe 18 her einströmenden Luft zu einem Gemisch mit λ=1 vermischt. Der Brennstoffanteil des Brennstoff-Luft-Gemisches läßt sich dabei durch die Abspritzmenge des zentralen Einspritzventils 27 vor der Einrichtung 26 zur Brennstoffverdampfung steuern. Nach Abschluß der Warmlaufphase oder bei einem Brennstoffmehrbedarf, zum Beispiel bei scharfem Beschleunigen, bei Bergauffahrt oder dergleichen, kann zusätzlich oder anstelle der Gemischaufbereitung mittels der zentralen Einrichtung 26 auf herkömmliche Einzeleinspritzung mit den Brennstoffeinspritzventilen 12 umgeschaltet werden.

In den Figuren 2 bis 4 ist die erfindungsgemäße Einrichtung 26 zur Verdampfung von Brennstoff, bei der es sich also um einen zentralen Verdampfer zur Versorgung mehrerer Zylinder 1 handelt, als eigenständiges Bauteil getrennt von der Brennkraftmaschine dargestellt. Bei der Einrichtung 26 handelt es sich um ein langgestrecktes Bauteil, das an seinem einen Ende zwei Einlässe 46, 47 und an seinem in Längserstreckungsrichtung gesehen gegenüberliegenden Ende zwei Auslässe 48, 49 aufweist. Während an den ersten Einlaß 46 die Leerlaufluftleitung 24 angeschlossen wird, ist der Einlaß 47 so angeordnet, daß vom zentralen Einspritzventil 27 abgegebener Brennstoff unmittelbar eintreten kann. Der erste Auslaß 48 ist dem ersten Einlaß 46 insofern zugeordnet, daß die über den Einlaß 46 eingeleitete Luft über den Auslaß 48 erwärmt wieder abgegeben wird. Analog verhält es sich mit dem Einlaß 47 und dem Auslaß 49, wobei der eingeleitete Brennstoff ganz oder teilweise verdampft wird, so daß also aus dem Auslaß 49 hauptsächlich Brennstoffdampf austritt. Im Bereich des Einlasses 47 ist die Einrichtung 26 druckdicht auf das Einspritzventil 27 aufgesetzt.

Die beiden Auslässe 48, 49 sind z.B. direkt mit dem Mischraum 25 verbunden. Bei dem Mischraum 25 handelt es sich beispielsweise um eine Mischeinrichtung mit einem integrierten sogenannten Flüssig-Phasen-Abscheider, der schwerflüchtige flüssige Brennstoffbestandteile aus dem Brennstoffdampf abscheidet, so daß eine Rückkondensation des Brennstoffdampfes in den Brennstoffdampf führenden Leitungen 35, 36 nahezu vollständig ausgeschlossen wird. Ein solcher Brennstoffabscheider wurde bereits in der DE-P 196 33 259.1 vorgeschlagen.

Zwischen den Einlässen 46, 47 und den Auslässen 48, 49 ist eine Vielzahl der Heizelemente 31, vorzugsweise Widerstands-Heizelemente in Form von PTC-Elementen, aber auch bimetallische Heizfolien oder Dickfilmheizer, angeordnet, die sich damit über den größten Teil der Länge der Einrichtung 26 erstrecken. Die einzelnen Heizelemente 31 sind bei einer Grundfläche von ca. 1 x 3cm ungefähr 1mm dick und liegen zwischen einem oberen und einem unteren folienartigen Trennblech 52, 53 eingebettet vor. Auf der den Heizelementen 31 jeweils abgewandten Seite der dünnen Trennbleche 52, 53 existieren Strömungskanäle 54, 55, die sich weitgehend über die gesamte Länge der Heizelemente 31 erstrecken. Der wenigstens eine obere Strömungskanal 54 stellt eine Verbindung des Einlasses 46 mit dem Auslaß 48 dar, so daß die in die Einrichtung 26 eingebrachte Luft über die Heizelemente 31 bzw. das obere Trennblech 52 hinwegströmen kann. Andererseits wird der über den Einlaß 47 eintretende Brennstoff in den unteren Strömungskanälen 55 entlanggeleitet und verdampft, so daß sich in den Strömungskanälen 55, die als Verdampfungsräume dienen, eine gewisse Verdampfungsfront entlangbewegt.

Das untere Trennblech 53 ist derart angeordnet und gegenüber den Strömungskanälen 55 mit beispielsweise zwei umlaufenden, oberhalb und unterhalb des Trennbleches 53 liegenden Dichtelementen 56 abgedichtet, daß die Heizelemente 31 ohne Brennstoffkontakt vorliegen. Andererseits ist es jedoch möglich, daß die Luft vom wenigstens einen Strömungskanal 54 direkt bis an die Heizelemente 31 gelangt. Neben der elektrischen und der Wärmeleitfähigkeit sind deshalb an das untere Trennblech 53 besondere Forderungen gestellt. Das für das untere Trennblech 53 verwendete Material sollte inert, also chemikalienbeständig sein und nur einen einzigen, konstanten Oxidationszustand aufweisen. Als Materialien eignen sich z.B. kupferfreie Metalle, besonders V2A-Stahl, Gold, Aluminium, und Kunststoffe. Außerdem bieten sich Trennbleche 53 an, die Gold- oder PTFE-Beschichtungen aufweisen, oder die mittels CVD- oder PVD-Beschichtungsverfahren (z.B. Titannitrid) behandelt wurden. Diese Materialien sorgen so für einen ausreichenden Schutz vor sogenanntem Plugging, bei dem es sich um negative teerhaltige Ablagerungen aufgrund schwer siedender Brennstoffbestandteile handelt.

Die Heizelemente 31 liegen zwar durch die beiden folienartigen Trennbleche 52, 53 gekapselt vor, sie werden jedoch von der einströmenden Luft gespült. Einerseits wird dabei in vorteilhafter Weise die Luft im Verlaufe des Durchströmens der Einrichtung 26 erwärmt, und andererseits wird wirkungsvoll verhindert, daß die sehr dünnen, empfindlichen Heizelemente 31 durchbrennen, reißen, brechen oder platzen. Die über den Auslaß 48 austretende erwärmte Luft kann als Verdünnungsluft dem verdampften Brennstoff in dem nachgeschalteten Mischraum 25 zur Stabilisierung der Dampfphase in oben beschriebener Weise beigemischt werden. Die elektrische Kontaktierung der Heizelemente 31 erfolgt über die Trennbleche 52, 53, die an ihren seitlichen Begrenzungen in Längsrichtung Kontaktierungsmittel 58 (Figur 4) besitzen. Im bestromten Zustand geben die Heizelemente 31 Wärme an den vorbeiströmenden Brennstoff und die Luft ab, wobei eine gleichzeitige Kühlung der Heizelemente 31 damit einhergeht.

Die Trennbleche 52, 53 und deren Auflageflächen im Verdampfergehäuse 30 sind besonders eben ausgeführt, damit die Heizelemente 31 eine optimale, spannungsarme und verzugsarme Auflage haben. Damit gewährleistet neben der bereits erläuterten Luftströmung eine weitere Maßnahme wirkungsvoll ein Auseinanderbrechen der Heizelemente 31, das bei bekannten gefalteten Kontaktblechen durch die Temperaturunterschiede des sehr ungleichmäßig anliegenden Bleches mit sehr viel größerer Wahrscheinlichkeit auftreten kann.

Das Verdampfergehäuse 30, das die Verdampferstruktur 29 vollständig umschließt, wird hauptsächlich von drei Gehäuseteilen gebildet, von denen ein Deckelteil 60 und ein Grundkörper 61 bereits die Verdampferstruktur 29 mit den Heizelementen 31 und den Trennblechen 52, 53 aufnehmen. Zu den Gehäuseteilen kann auch wenigstens ein Federelement 62 gezählt werden, das hauptsächlich auf das Deckelteil 60 mit seiner Federspannung wirkt. Der z.B. aus einem gut wärmeisolierenden Kunststoff ausgebildete Grundkörper 61 stellt ein sehr verformungsstabiles Bauteil dar, das als verformungsfreie Unterlage für das untere Trennblech 53 und somit für die Heizelemente 31 dient. Der Einlaß 47 und der Auslaß 49 sind z.B. bohrungsähnlich in dem Grundkörper 61 vorgesehen. Die Abdichtung der Verdampferstruktur 29 erfolgt durch die zwischen dem Deckelteil 60 und dem Grundkörper 61 sowie dem unteren Trennblech 53 angeordneten stadionrundenähnlichen Dichtelemente 56. Die Dichtelemente 56 liegen in entsprechend geformten Ringnuten 63 (Figur 3) vor, von denen sowohl eine im Deckelteil 60 als auch eine im Grundkörper 61 ausgeformt ist.

Das die Verdampferstruktur 29 auf der luftdurchströmten Seite abdeckende Deckelteil 60 ist als biegeweiches Bauteil, z.B. ebenfalls aus wärmeisolierendem Kunststoff, ausgeführt, das den Anpressdruck des auf der der Verdampferstruktur 29 abgewandten Seite des Deckelteils 60 anliegenden bügelförmigen bzw. haubenförmigen Federelements 62 sehr gleichmäßig auf das obere Trennblech 52 und somit auf die Heizelemente 31 weitergibt. Das Federelement 62 ist so ausgeführt, daß es in vorteilhafter Weise mit seinem Biegeprofil flächig über die gesamte Länge der Heizelemente 31 gleichmäßig wirkt. Das Federelement 62 erstreckt sich beispielsweise von einem oberen, am Deckelteil 60 anliegenden Anpressabschnitt 64 über zwei Seitenabschnitte 65 an den Querseiten des Grundkörpers 61 entlang bis zum Boden 66 des Grundkörpers 61. Mit von den Seitenabschnitten 65 weitgehend rechtwinklig abgeknickten kurzen Halteabschnitten 67 kann das Federelement 62 am Boden 66 des Grundkörpers 61 spangenartig eingehakt werden. Wie die Figur 4 zeigt, können auch anstelle eines Federelements 62 zwei spangenförmige Federelemente 62' vorgesehen sein.

An der dem Boden 66 gegenüberliegenden und damit den Heizelementen 31 zugewandten Oberseite des Grundkörpers 61 sind mehrere nutähnliche Ausnehmungen 69 vorgesehen, die von dem unteren Trennblech 53 nach oben hin begrenzt werden und somit die Strömungskanäle 55 für den Brennstoff, den Brennstoffdampf bzw. die Verdampfungsfront bilden. Um die entstehende Verdampfungsfront über die Länge der Strömungskanäle 55 zu stabilisieren, sind verschiedene Maßnahmen denkbar. Indem die Verdampfungsbedingungen über die Länge der Heizelemente 31 bzw. der Strömungskanäle 55 verbessert werden, ist es möglich, das Schwingen der Verdampfungsfront stark einzuschränken. Erreicht wird eine solche erwünschte Verdampfungsfrontstabilisierung z.B. durch eine kontinuierliche Verjüngung der Ausnehmungen 69 vom Einlaß 47 bis zum Auslaß 49, so daß eine stetige Querschnittsverkleinerung der Strömungskanäle 55 vorliegt, wie es den Figuren 2 und 4 entnehmbar ist. Außerdem sind die engen Ausnehmungen 69 insofern von Vorteil, daß der sogenannte Leidenfrost-Effekt unterbunden wird. Bei diesem Phänomen handelt es sich um die Erscheinung, daß Flüssigkeitströpfchen an einem heißen Teil nicht unmittelbar verdampfen, sondern sich "tanzend" durch eine Dampfschicht getragen an diesem Teil bewegen, was in der vorliegenden Einrichtung 26 nachteilig wäre.

Eine weitere Maßnahme besteht darin, Heizelemente 31 in der Einrichtung 26 einzusetzen, deren Curietemperatur unterschiedlich ist. So ist es beispielsweise vorstellbar, im Bereich des Einlasses 47 ein Heizelement 31 mit einer Curietemperatur von 150°C vorzusehen, während das letzte Heizelement 31 nahe des Auslasses 49 eine Curietemperatur von ca. 220°C besitzt. Die Heizelemente 31 dazwischen weisen entsprechend zwischen 150°C und 220°C ansteigende Curietemperaturen auf. Eine weitere Maßnahme sieht vor, die beiden oben erwähnten Möglichkeiten zu kombinieren, indem also sowohl eine Querschnittsverjüngung der Strömungskanäle 55 als auch eine Curietemperaturerhöhung der Heizelemente 31 vorgesehen ist. Andererseits ist es auch möglich, Wirbel und Querströmungen erzeugende Einbauten in den Strömungskanälen 55 anzuordnen. Mit allen Maßnahmen wird ein Stabilisieren der Verdampfungsfront, die dem Ort des Phasenübergangs entspricht, erreicht und im stationären Betriebsfall der Einrichtung 26 eine gleichmäßige Dampfabgabe bewirkt.

## Patentansprüche

1. Einrichtung zur Verdampfung von Brennstoff, vorzugsweise zur Verwendung in Brennkraftmaschinen mit einem Brennstoffeinspritzsystem, mit einem Verdampfergehäuse (30), mit Heizelementen (31), mit wenigstens einem Einlaß (47) für Brennstoff, mit wenigstens einem Auslaß (49) für Brennstoffdampf, mit mehreren zwischen dem wenigstens einen Einlaß (47) und dem wenigstens einen Auslaß (49) vorgesehenen Verdampfungsräumen (55) nahe der Heizelemente (31), dadurch gekennzeichnet, daß zusätzlich zu den Ein- und Auslässen (47, 49) für den Brennstoff wenigstens ein Einlaß (46) für Luft und wenigstens ein Auslaß (48) für erwärmte Luft vorgesehen ist und die Heizelemente (31) derart gekapselt sind, daß kein Brennstoffkontakt möglich ist.

2. Einrichtung nach Anspruch 1, dadurch gekennzeichnet, daß die Heizelemente (31) PTC-, NTC-Elemente, bimetallische Heizfolien oder Dickfilmheizer sind.

3. Einrichtung nach Anspruch 1 oder 2, dadurch gekennzeichnet, daß die Heizelemente (31) zwischen zwei ebenen, folienartigen Trennblechen (52, 53) eingebettet vorliegen.

4. Einrichtung nach Anspruch 3, dadurch gekennzeichnet, daß auf der den Heizelementen (31) abgewandten Seite des einen Trennbleches (52) wenigstens ein Strömungskanal (54) für die Luft und auf der den Heizelementen (31) abgewandten Seite des anderen Trennbleches (53) mehrere Strömungskanäle (55) als Verdampfungsräume für den Brennstoff ausgebildet sind.

5. Einrichtung nach Anspruch 4, dadurch gekennzeichnet, daß sich die Strömungskanäle (54, 55) weitgehend über die gesamte Länge der Heizelemente (31) erstrecken.

6. Einrichtung nach Anspruch 4 oder 5, dadurch gekennzeichnet, daß das den Strömungskanälen (55) für den Brennstoff bzw. Brennstoffdampf zugewandte Trennblech (53) derart gegenüber den Heizelementen (31) abgedichtet ist, daß eine Benetzung der Heizelemente (31) mit Brennstoff ausgeschlossen ist.

7. Einrichtung nach einem der Ansprüche 4 bis 6, dadurch gekennzeichnet, daß der wenigstens eine Strömungskanal (54) für die Luft gegenüber dem zugewandten Trennblech (52) derart ausgeformt ist, daß eine Belüftung der Heizelemente (31) erfolgt.

8. Einrichtung nach einem der vorhergehenden Ansprüche, dadurch gekennzeichnet, daß das Verdampfergehäuse (30) von einem Grundkörper (61), einem Deckelteil (60) und wenigstens einem Federelement (62, 62') gebildet wird, wobei die Strömungskanäle (55) für den Brennstoff an der den Heizelementen (31) zugewandten Oberseite des Grundkörpers (61) eingebracht sind.

9. Einrichtung nach Anspruch 8, dadurch gekennzeichnet, daß der Grundkörper (61) aus einem Kunststoff gefertigt ist.

10. Einrichtung nach Anspruch 8, dadurch gekennzeichnet, daß das wenigstens eine Federelement (62, 62') derart außerhalb des Grundkörpers (61) und des Deckelteils (60) angeordnet ist, daß es das Deckelteil (60) gegen die Heizelemente (31) indirekt anpreßt.

11. Einrichtung nach Anspruch 10, dadurch gekennzeichnet, daß das wenigstens eine Federelement (62, 62') spangenartig am Grundkörper (61) einhakbar ist.

12. Einrichtung nach Anspruch 1, dadurch gekennzeichnet, daß sich die Strömungskanäle (55) als Verdampfungsräume für den Brennstoff zwischen dem Einlaß (47) und dem Auslaß (49) entlang der Heizelemente (31) im Querschnitt verjüngen.

13. Einrichtung nach Anspruch 1 oder 12, dadurch gekennzeichnet, daß die Heizelemente (31) derart ausgeführt sind, daß das dem Einlaß (47) nächstliegende Heizelement (31) die niedrigste und das dem Auslaß (49) nächstliegende Heizelement (31) die höchste Curietemperatur besitzt und die dazwischenliegenden Heizelemente (31) entsprechend ansteigende Curietemperaturen haben.

14. Einrichtung nach Anspruch 13, dadurch gekennzeichnet, daß das dem Einlaß (47) nächstliegende Heizelement (31) eine Curietemperatur von ca. 150°C und das dem Auslaß (49) nächstliegende Heizelement (31) eine Curietemperatur von ca. 220°C besitzt.

15. Einrichtung nach Anspruch 1, dadurch gekennzeichnet, daß ihr ein Mischraum (25) nachgeordnet ist, der eine Mischeinrichtung für die erwärmte Luft und den Brennstoffdampf und einen Brennstoffabscheider beinhaltet.

## Claims

1. Device for the evaporation of fuel, preferably for use in internal combustion engines having a fuel injection system, with at evaporator housing (30), with heating elements (31), with at least one inlet (47) for fuel, with at least one outlet (49) for fuel vapour, and with a plurality of evaporation spaces (55) provided between the at least one inlet (47) and the at least one outlet (49) and located near the heating elements (31), characterized in that, in addition to the inlet and outlet (47, 49) for fuel, at least one inlet (46) for air and at least one outlet (48) for heated air are provided, and the heating elements (31) are encased in such a way that there is no possibility of fuel contact.

2. Device according to Claim 1, characterized in that the heating elements (31) are PTC or NTC elements, bimetallic heating foils or thick-film heaters.

3. Device according to Claim 1 or 2, characterized in that the heating elements (31) are embedded between two plane foil-like separating sheets (52, 53).

4. Device according to Claim 3, characterized in that at least one flow duct (54) for the air is formed on that side of one separating sheet (52) which faces away from the heating elements (31) and a plurality of flow ducts (55) as evaporation spaces for the fuel are formed on that side of the other separating sheet (53) which faces away from the heating elements (31).

5. Device according to Claim 4, characterized in that the flow ducts (54, 55) extend substantially over the entire length of the heating elements (31).

6. Device according to Claim 4 or 5, characterized in that the separating sheet (53) facing the flow ducts (55) for the fuel or fuel vapour is sealed off relative to the heating elements (31) in such a way that wetting of the heating elements (31) with fuel is ruled out.

7. Device according to one of Claims 4 to 6, characterized in that the at least one flow duct (54) for the air is shaped, relative to the separating sheet (52) facing it, in such a way that ventilation of the heating elements (31) takes place.

8. Device according to one of the preceding claims, characterized in that the evaporator housing (30) is formed by a basic body (61), a cover part (60) and at least one spring element (62, 62'), the flow ducts (55) for the fuel being introduced on the top side of the basic body (61), said top side facing the heating elements (31).

9. Device according to Claim 8, characterized in that the basic body (61) is manufactured from a plastic.

10. Device according to Claim 8, characterized in that the at least one spring element (62, 62') is arranged outside the basic body (61) and the cover part (60) in such a way that said spring element indirectly presses the cover part (60) against the heating elements (31).

11. Device according to Claim 10, characterized in that the at least one spring element (62, 62') is capable of being hooked in the manner of a clip on the basic body (61).

12. Device according to Claim 1, characterized in that the flow ducts (55) as evaporation spaces for the fuel narrow in cross section between the inlet (47) and the outlet (49) along the heating elements (31).

13. Device according to Claim 1 or 12, characterized in that the heating elements (31) are designed in such a way that the heating element (31) nearest to the inlet (47) has the lowest Curie temperature and the heating element (31) nearest to the outlet (49) has the highest Curie temperature, and the intermediate heating elements (31) have correspondingly rising Curie temperatures.

14. Device according to Claim 13, characterized in that the heating element (31) nearest to the inlet (47) has a Curie temperature of about 150°C and the heating element (31) nearest to the outlet (49) has a Curie temperature of about 220°C.

15. Device according to Claim 1, characterized in that it is followed by a mixing space (25) which contains a mixing device for the heated air and the fuel vapour and a fuel separator.

## Revendications

1. Installation pour vaporiser du carburant de préférence applicable à des moteurs à combustion interne comprenant :
- un système d'injection de carburant,
- un boîtier d'évaporateur (30) équipé d'éléments chauffants (31), d'au moins une entrée (47) pour le carburant et d'au moins une sortie (49) pour les vapeurs de carburant,
- plusieurs chambres de vaporisation (55) prévues entre au moins une entrée (47) et au moins une sortie (49), ces chambres étant a proximité des éléments chauffants (31),
caractérisée en ce que
en plus des entrées et des sorties (47, 49) de carburant il est prévu au moins une entrée (46) pour l'air et au moins une sortie (48) pour l'air réchauffé, et les éléments chauffants (31) sont encapsulés pour interdire tout contact de carburant.

2. Installation selon la revendication 1,
caractérisée en ce que
les éléments chauffants (31) sont des éléments PTC, NTC, des feuilles chauffantes bimétalliques ou un dispositif de chauffage à film épais.

3. Installation selon les revendications 1 ou 2,
caractérisée en ce que
les éléments chauffants (31) sont intégrés entre deux tôles de séparation (52, 53), planes, en forme de feuilles.

4. Installation selon la revendication 3,
caractérisée en ce que
la face de la tôle de séparation (52) opposée aux éléments chauffants (31), comporte au moins un canal d'écoulement (54) pour l'air, et la face de l'autre tôle de séparation (53) non tournée vers les éléments chauffants (31) comporte plusieurs canaux d'écoulement (55) comme chambres de vaporisation de carburant.

5. Installation selon la revendication 4,
caractérisée en ce que
les canaux d'écoulement (54, 55) s'étendent au moins sur toute la longueur des éléments chauffants (31).

6. Installation selon l'une des revendications 4 ou 5,
caractérisée en ce que
la tôle de séparation (53) tournée vers les canaux d'écoulement (55) du carburant et des vapeurs de carburant, est fermée de manière étanche par rapport à l'élément chauffant (31) pour exclure que l'élément chauffant (31) ne risque d'être mouillé par le carburant.

7. Installation selon l'une des revendications 4 à 6,
caractérisée en ce qu'
au moins un canal d'écoulement (54) est formé pour l'air, en regard de la tôle de séparation (52) pour assurer la ventilation des éléments chauffants (31).

8. Installation selon l'une quelconque des revendications précédentes,
caractérisée en ce que
le boîtier d'évaporateur (30) est formé d'au moins un corps de base (61), d'un couvercle (60) et d'au moins un élément de ressort (62, 62'), les canaux d'écoulement (55) pour le carburant étant réalisés dans la face supérieure du corps de base (61) tournée vers les éléments chauffants (31).

9. Installation selon la revendication 8,
caractérisée en ce que
le corps de base est en matière plastique.

10. Installation selon la revendication 8,
caractérisée en ce qu'
au moins un élément de ressort (62, 62') est prévu à l'extérieur du corps de base (61) et du couvercle (60), et presse indirectement le couvercle (60) contre les éléments chauffants (31).

11. Installation selon la revendication 10,
caractérisée en ce qu'
au moins un élément de ressort (62, 62') est accroché à la manière d'une griffe dans le corps de base (61).

12. Installation selon la revendication 1,
caractérisée en ce que
les canaux d'écoulement (55) rétrécissent leur section comme chambres de vaporisation pour le carburant entre l'entrée (47) et la sortie (49) le long des éléments chauffants (31).

13. Installation selon la revendication 1 ou 12,
caractérisée en ce que
les éléments chauffants (31) sont réalisés pour que l'élément chauffant (31) le plus proche de l'entrée (47) possède la température de Curie la plus faible et que l'élément chauffant (31) le plus près de la sortie (49) possède la température de Curie la plus élevée et que les éléments chauffants (31), intermédiaires possèdent des températures de Curie croissantes de façon correspondante.

14. Installation selon la revendication 13,
caractérisée en ce que
l'élément chauffant (31) le plus proche de l'entrée (47) a une température de Curie d'environ 150°C et l'élément chauffant (31) le plus proche de la sortie (49) a une température de Curie d'environ 220°C.

15. Installation selon la revendication 1,
caractérisée en ce qu'
elle est suivie d'une chambre de mélange (25) qui contient une installation de mélange pour l'air réchauffé et le carburant ainsi qu'un séparateur de carburant.
